# FASCICULE DE BREVET EUROPEEN

(11) **EP 0 434 738 B1**
(45) Date de publication et mention de la délivrance du brevet: **10.03.1993**
(21) Numéro de dépôt: 89910635.5
(22) Date de dépôt: 14.09.1989
(51) Int. Cl.: G11C 16/06

(54) **MEMOIRE EPROM AVEC SIGNATURE INTERNE CONCERNANT NOTAMMENT LE MODE DE PROGRAMMATION**
EPROM-SPEICHER MIT INTERNER UNTERZEICHNUNG, INSBESONDERE DIE PROGRAMMIERWEISE BETREFFEND
EPROM MEMORY WITH INTERNAL SIGNATURE CONCERNING, IN PARTICULAR, THE PROGRAMMING MODE

(30) Priorité: 14.09.1988 FR 8811997
(43) Date de publication de la demande: 03.07.1991
(73) Titulaire: SGS-THOMSON MICROELECTRONICS SA, 94250 Gentilly (FR)
(72) Inventeur: GAULTIER, Jean-Marie, F-13790 Rousset (FR); CONAN, Bertrand, F-13100 Aix-en-Provence (FR); FARRUGIA, Augustin, F-13600 La Ciotat (FR)
(74) Mandataire: Schmit, Christian Norbert Marie
(86) Numéro de dépôt international: FR8900466
(87) Numéro de publication internationale: WO9003033

(56) Documents cités:
- EP-A- 0 115 565
- EP-A- 0 129 054
- DE-A- 2 840 305
- FR-A- 2 608 317
- US-A- 4 055 802
- US-A- 4 217 637

## Description

L'invention concerne les mémoires électriquement programmables, et plus précisément celles qui sont connues sous le nom de mémoires EPROM (de l'anglais "Electrically Programmable Read Only Memory").

Ces mémoires sont généralement fabriquées et vendues vierges, c'est-à-dire sans informations inscrites dans la mémoire. Elles sont livrées à un utilisateur qui va les programmer lui-même en fonction de ses besoins ou les faire programmer par une entreprise spécialisée. Par programmation d'une mémoire, on entend ici l'inscription de données dans la mémoire.

La machine de programmation doit pouvoir recevoir des mémoires d'origines différentes (de fabricants différents), mais aussi de types différents pour une même origine.

C'est pourquoi l'on prévoit généralement, pour faciliter la gestion des pièces à programmer par les machines, que les pièces contiennent une information, d'une part sur leur provenance (identification du fabricant par exemple, ou même de la série fabriquée), et d'autre part sur leur type.

Dans la pratique, on prévoit une information sous forme d'un mot de huit bits pour l'identification de l'origine, et une information sous forme d'un mot de huit bits pour le type de mémoire.

Ces informations sont contenues dans le circuit-intégré sous forme d'un circuit électronique interne, ce circuit ayant une configuration différente selon les informations à fournir.

Usuellement, c'est par le choix de connexions appropriées dans ce circuit que l'on définit l'information à transmettre à la machine de programmation. Ces connexions peuvent être réalisées par une couche métallique gravée; le motif de gravure définit donc l'information désirée sur l'origine et le type de la mémoire. Mais l'information peut être définie par d'autres moyens de configuration d'un circuit à l'intérieur-de la puce de circuit-intégré contenant la mémoire EPROM; par exemple, la configuration peut être définie à partir d'un masque d'implantation d'impuretés; ou bien par la présence ou l'absence de transistors; de manière générale il s'agit de toutes façons d'une information obtenue sous forme d'une configuration figée du circuit interne à la puce, configuration obtenue au cours du processus de fabrication. Une telle réalisation est par exemple décrite dans le brevet US-A-4 055 802. On peut en effet, pour individualiser un circuit, établir des liaisons à la demande entre différents points de ce circuit avant la fin de la fabrication.

Lorsque la pièce à programmer est introduite dans la machine de programmation, la machine teste la pièce pour y lire l'information contenue sur l'origine et le type de la mémoire. Et elle effectue la programmation en fonction de cette information.

Ce système fonctionne très bien et a de nombreux avantages: l'information désirée est inscrite définitivement puisqu'elle est contenue sous forme d'un motif bien défini d'une portion de couche de fabrication du circuit-intégré; elle peut donc resservir lors d'une programmation ultérieure de la mémoire (si la mémoire est programmée plusieurs fois, ce qui est possible avec les EPROM effaçables par ultraviolets); d'autre part, l'information peut être placée dans la pièce à un stade tardif de fabrication dans le cas où le niveau de métallisation est utilisé pour coder l'information; le niveau de métallisation est en effet l'un des tous derniers niveaux pour lequel des opérations de masquage sont prévus; il en résulte que des pièces de types différents peuvent suivre jusqu'au bout les mêmes filières de fabrication; seule une étape tardive sera différente selon les différents types.

On s'est aperçu cependant que si ce système est très efficace en ce qui concerne l'information sur l'origine de la pièce, il présente des inconvénients en ce qui concerne l'information sur le type de mémoire.

Pour faire comprendre ces inconvénients, on va donner pour exemple le cas où l'information sur le type de mémoire concerné est une information sur le mode de programmation qu'il faut utiliser pour programmer cette mémoire. Mais les inconvénients existent aussi si l'information porte plus généralement sur les performances de la mémoire.

La mémoire peut être programmée par exemple selon deux modes de programmation qui peuvent être un mode de programmation dit "rapide" et un mode de programmation dit "intelligent". Dans le mode de programmation "rapide", on essaye de programmer chaque cellule de mémoire en un temps bref par une impulsion unique de tension qui est calibrée de la même manière pour toutes les cellules; puis on vérifie; si la programmation est insuffisante on recommence; on ne peut recommencer qu'un certain nombre de fois. Dans le mode de programmation "intelligent", on applique à une cellule une impulsion de programmation, après quoi on vérifie que la programmation est suffisante; si elle ne l'est pas, on recommence; lorsque la programmation devient suffisante, on reprogramme à nouveau pendant une durée triple du temps total de programmation précédent. La programmation rapide présente l'avantage, comme son nom l'indique, d'être plus rapide, mais elle est a priori moins fiable; par conséquent on ne peut se permettre de l'utiliser que pour des pièces qui ont été fabriquées selon une technologie dont la fiabilité est plus élevée, car alors on peut être raisonnablement sûr que la programmation rapide fonctionnera correctement.

Les pièces comportant l'information "programmation rapide" seront reconnues par la machine de programmation comme devant être programmées selon le mode "rapide"; les pièces comportant l'information "programmation intelligente" seront reconnues comme devant être programmées selon le mode "intelligent".

Mais le fabricant qui expédie ses pièces vierges à l'utilisateur ou à la société de programmation les teste avant de les envoyer. Et parmi les tests effectués, certains tests permettent de s'apercevoir que des pièces qui théoriquement ont la capacité d'être programmées selon le mode "rapide" n'ont pas en réalité cette capacité; il s'avère après fabrication et test final que les pièces doivent être déclassées car elles ne peuvent être programmées en pratique que par un mode de programmation "intelligent".

Comme ces pièces comportent une signature "programmation rapide", elles seront reconnues par la machine de programmation comme devant être programmées par le mode "rapide". Il y a incompatibilité de fait entre l'information interne dans la pièce et les caractéristiques réelles de la pièce. Les pièces doivent être mises au rebut.

Pour éviter cet inconvénient sans revenir sur le principe essentiel de la nature figée du marquage des pièces en ce qui concerne l'origine et le type de la pièce, on propose selon l'invention de ne marquer les pièces qu'après le test final, le marquage étant constitué par une information inscrite dans un élément de mémoire programmable et non effaçable, cet élément étant apte. à être programmé après le test final du circuit-intégré. L'information est donc inscrite dans une mémoire auxiliaire spéciale qui peut être constituée par une mémoire dite mémoire UPROM; une mémoire UPROM est par exemple une EPROM masquée par une couche métallique empêchant son effacement par rayons ultraviolets.

Par conséquent, selon l'invention, on propose d'incorporer à une mémoire principale EPROM un circuit auxiliaire comportant une mémoire spéciale programmable après le test final et non effaçable, notamment une mémoire UPROM; cette mémoire est accessible en lecture et en écriture par les plots d'entrées-sorties de la puce de circuit-intégré comportant la mémoire EPROM. L'accès se fait toutefois en utilisant des configurations interdites au client utilisateur du circuit-intégré. La mémoire EPROM est testée en fin de fabrication; selon les résultats du test une information est inscrite par l'appareil de test dans la mémoire spéciale du circuit auxiliaire pour indiquer le type de programmation approprié; une information sur l'origine de la pièce peut aussi être inscrite dans la mémoire spéciale si on le désire, plutôt que de définir l'origine par l'intermédiaire d'une configuration figée de circuit (motif d'interconnexions particulier dans le dernier niveau de métallisation de la puce, ou autre moyen). La mémoire UPROM peut éventuellement être remplacée par des fusibles.

La machine de programmation comportera des moyens pour lire l'information contenue dans la mémoire spéciale avant de procéder à la programmation, de la même manière que si l'information était définie par un circuit à configuration figée.

Lorsque le fabricant teste la pièce avant de l'expédier aux clients ou à l'entreprise de programmation, il inscrit dans la mémoire spéciale (UPROM) les informations appropriées compatibles avec les résultats du test: si le test indique que malgré les prévisions la mémoire ne devrait pas être programmée selon un algorithme rapide, une information correspondante sera indiquée dans la mémoire UPROM et la pièce ne sera pas mise au rebut.

L'information contenue dans la mémoire spéciale est indélébile, cette information ne pouvant en particulier plus être effacée par des rayons ultraviolets servant à effacer la mémoire EPROM. De préférence on pourra aussi prévoir que l'accès en écriture de la mémoire spéciale est interdit, par exemple par brûlage d'un fusible ou programmation dans la mémoire spéciale d'un bit d'interdiction, après que l'inscription des données ait été faite par le fabricant.

## Revendications

1. Mémoire électriquement programmable réalisée en circuit-intégré, caractérisée en ce qu'elle comporte sur le même circuit-intégré une mémoire auxiliaire programmable après test final du circuit-intégré et non effaçable, l'accès en écriture et en lecture dans la mémoire auxiliaire non effaçable étant fait à partir des plots d'entrée/sortie de données du circuit-intégré, et la mémoire auxiliaire non effaçable contenant notamment une information sur le mode de programmation de la mémoire principale.

2. Mémoire selon la revendication 1, caractérisée en ce que la mémoire auxiliaire non effaçable est une mémoire morte électriquement programmable masquée par une couche métallique interdisant son effacement par rayons ultraviolets.

3. Mémoire selon la revendication 2, caractérisée en ce qu'il est prévu un moyen d'interdiction de l'accès en écriture à la mémoire auxiliaire non effaçable après une inscription de données dans cette mémoire.

4. Mémoire selon l'une des revendications 1 à 3, caractérisée en ce que l'accès en écriture de la mémoire auxiliaire non effaçable est fait en utilisant des configurations non accessibles au client acheteur du circuit-intégré.

## Patentansprüche

1. Elektrisch programmierbarer Speicher, der als integrierte Schaltung ausgeführt ist, dadurch gekennzeichnet, daß er auf der gleichen integrierten Schaltung einen Hilfsspeicher enthält, der nach dem Abschlußtest der integrierten Schaltung programmierbar und nicht löschbar ist, wobei der Zugriff beim Schreiben und Lesen in dem nicht löschbaren Hilfsspeicher über Daten-Eingangs/Ausgangs-Anschlüsse der integrierten Schaltung erfolgt und wobei der nicht löschbare Hilfsspeicher insbesondere eine Information über den Programmiermodus des Hauptspeichers enthält.

2. Speicher nach Anspruch 1, dadurch gekennzeichnet, daß der nicht löschbare Hilfsspeicher ein elektrisch programmierbarer toter Speicher ist, der durch eine Metallschicht abgedeckt ist, die sein Löschen durch Ultraviolettstrahlen verhindert.

3. Speicher nach Anspruch 2, dadurch gekennzeichnet, daß ein Mittel vorgesehen ist, das den Schreibzugriff auf auf den nicht löschbaren Hilfsspeicher nach einem Einschreiben von Daten in diesen Speicher verhindert.

4. Speicher nach einem der Ansprüche 1 bis 3, dadurch gekennzeichnet, daß der Schreibzugriff auf den nicht löschbaren Hilfsspeicher unter Verwendung von Konfigurationen erfolgt, die dem die integrierte Schaltung kaufenden Kunden nicht zugänglich sind.

## Claims

1. An electrically programmable memory made in integrated circuit form, characterised in that it comprises, on the same integrated circuit, an auxiliary memory that is programmable after final testing of the integrated circuit and is unerasable, access to the unerasable auxiliary memory in reading and writing modes being achieved through data input/output pads of the integrated circuit, and the unerasable auxiliary memory containing in particular an item of information on the mode of programming of the main memory.

2. A memory according to claim 1, characterised in that the unerasable auxiliary memory is an electrically programmable read-only memory masked by a metal layer preventing its erasure by ultraviolet rays.

3. A memory according to claim 2, characterised in that there is provided means for barring access in writing mode to the unerasable auxiliary memory after recording data in this memory.

4. A memory according to any one of claims 1 to 3, characterised in that access to the unerasable auxiliary memory in writing mode is effected by using configurations not accessible to the customer who purchases the integrated circuit.
